# EUROPÄISCHE PATENTANMELDUNG

(11) **EP 1 462 571 A2**
(43) Veröffentlichungstag der Anmeldung: **29.09.2004**
(21) Anmeldenummer: 04007504.6
(22) Anmeldetag: 28.03.2004
(51) Int. Cl.: E01C 11/22

(54) **Entwässerungsaufbau, insbesondere für Parkplätze oder Zufahrten**

(30) Priorität: 28.03.2003 DE 20305149 U
(71) Anmelder: Hübner-Lee Ernst Hübner e.K., 87752 Holzgünz (DE)
(72) Erfinder: Hübner, Ernst, 87752 Holzgünz (DE)
(74) Vertreter: Fiener, Josef

(57) **Zusammenfassung**

Zur Schaffung eines stabilen Entwässerungsaufbaus, insbesondere für Parkplätze oder Zufahrten, mit wenigstens zwei Schichten, nämlich einer Tragschicht (10) über dem Baugrund (50) und einem Fahrbelag (20), wird vorgeschlagen, dass die Tragschicht (10) aus gebrochenem Schottermaterial oder Drainagenkies besteht und der Fahrbelag (20) aus verfüllten Gitterelementen (22) besteht, die miteinander durch Nut- und Federverbindungen (23) im Verbund stehen.

## Beschreibung

Die Erfindung betrifft einen Entwässerungsaufbau gemäß den oberbegrifflichen Merkmalen des Anspruches 1.

Parkplätze oder Zufahrten müssen wegen der hohen Gewichtsbelastung durch die darüber fahrenden Fahrzeuge in der Regel befestigt werden. Die Befestigung des Untergrundes hat verschiedene Aufgaben zu erfüllen. Eine der Hauptaufgaben ist es dabei, dass Niederschläge möglichst rasch abtransportiert werden, um eine Versumpfung der Parkplätze oder Zufahrten zu vermeiden. Weiterhin soll eine stabile Unterlage für die teilweise sehr schweren Fahrzeuge (z.B. Feuerwehr-Lkw) geschaffen werden. Schließlich soll der befestigte Untergrund auch langlebig, haltbar und gut zu pflegen sein. Aus diesen Gründen sind Parkplätze oder Zufahrten in der Regel mehrschichtig aufgebaut. Als unterste Schicht ist meist eine verdichtete Tragschicht aus Kies mit ca. 60 cm Aufbau vorgesehen, auf der eine Ausgleichsschicht aufgetragen wird und dann als oberste Schicht ein Fahrbelag, auf dem die Fahrzeuge abgestellt oder bewegt werden. Bekannte Tragschichten sind somit in der Regel bis zum Bauuntergrund 80 cm tief und durch Rütteln hochverdichtet, um genügend Frostsicherheit bieten zu können. Der Fahrbelag besteht häufig aus Pflaster- oder Rasensteinen, die zu einer durchgängigen Fläche verlegt sind. Das Innere der Rasensteine wird dabei verfüllt, wobei als Füllmaterial meist Sand oder Splittmaterial eingesetzt wird, das auch in der Ausgleichsschicht verwendet wird. Das Material, mit dem die Elemente verfüllt werden, sollte wasserdurchlässig sein, d. h. sich nicht verfestigen, um die Drainagewirkung der Elemente zu erhalten. Die Ausgleichsschicht dient sowohl der Wasserabführung als auch der Stabilisierung des Untergrundes und der Bereitstellung einer ebenen Auflagefläche für die Elemente des Fahrbelags.

Nachteil des bekannten Entwässerungsaufbaus ist insbesondere dessen aufwändige Herstellung durch die erforderliche Verdichtung. Zudem wird durch die Befestigung der Untergrund relativ hart, wodurch die Sickerfähigkeit stark reduziert wird und daher eine Kanalisation oder Entwässerung unumgänglich ist. Dies führt zu weiteren erheblichen Kosten, da neben der Flächenentwässerung auch Ablaufschächte und Kanalrohre angelegt werden müssen.

Aufgabe der vorliegenden Erfindung ist daher, einen kostengünstigen Entwässerungsaufbau, insbesondere für Parkplätze oder Zufahrten bereitzustellen, der planeben, wasserdurchlässig, stabil und langlebig ist.

Diese Aufgabe wird gelöst durch einen Entwässerungsaufbau nach Anspruch 1. Vorteilhafte Ausgestaltungen sind Gegenstand der Unteransprüche.

Der erfindungsgemäße Entwässerungsaufbau weist einen geschichteten Aufbau auf, der aus zumindest zwei Schichten besteht. So ist über dem Untergrund eine Tragschicht vorgesehen und darüber ein oberer Fahrbelag, auf dem sich die Fahrzeuge bewegen. Im Gegensatz zu bekannten Tragschichten weist die erfindungsgemäße Tragschicht nur eine Dicke von ca. 15 bis 35 cm auf, also weniger als die Hälfte als beim üblichen Aufbau. Zudem muss keine Verdichtung erfolgen, da die relativ dünne und daher kostengünstig zu erstellende Tragschicht aus einem Schottermaterial oder Drainagenkies ohne Feinanteile besteht, das sich teilweise verkeilt, wodurch eine Verdichtung verhindert wird. Hierdurch bleiben die Zwischenräume offen, so dass eine rasche Entwässerung über die gesamte Grundfläche erfolgt. Die Gewichtskräfte der Fahrzeuge werden durch den Entwässerungsaufbau sicher aufgenommen, da diese von dem zusammenhängenden, im Verbund stehenden Fahrbelag auf die Tragschicht breitflächig übertragen werden. Dadurch kann auf eine kostenintensive Kanalisation komplett verzichtet werden, ebenso auf die tiefe, frostsichere Auslegung der Tragschicht.

Durch den Fahrbelag aus miteinander verzahnten Gitterelementen werden die auftretenden Kräfte sicher abgeleitet und über eine große Fläche verteilt. Der erfindungsgemäße Entwässerungsaufbau ist folglich kostengünstig, stabil, haltbar, planeben und besonders wasserdurchlässig. Der Fahrbelag stützt sich bei der erfindungsgemäßen Gestaltung des Entwässerungsaufbaus in Art eines Floßes über der Tragschicht und dem Bauuntergrund ab, wobei der Aufbau in vorteilhafter Weise mit nur etwa der halben sonst üblichen Bautiefe auch direkt auf dem Untergrund erfolgen kann.

Als Material für die Tragschicht ist vorzugsweise gebrochener Schotter in der Körnung 20 bis 150 mm oder Drainagenkies in ähnlicher Stärke vorgesehen, wodurch die hohe Versickerungsfähigkeit und rasche Wasserdurchlässigkeit gewährleistet ist. Dabei verkeilen sich die einzelnen Schotterteile der Tragschicht nur teilweise, so dass eine Verfestigung des Untergrundes ausbleibt. Die Materialien bringen überdies den Vorteil mit sich, dass sie ähnlich wie in einer Rigole kaum Restfeuchte bewahren, was sich hinsichtlich der Frostsicherheit als vorteilhaft erweist.

Nachstehend wird die Erfindung anhand der Figuren näher erläutert und beschrieben. Es zeigen:
- Fig. 1: einen erfindungsgemäßen Entwässerungsaufbau für Parkplätze oder Zufahrten in schematischer Darstellung; und
- Fig. 2: ein Ausführungsbeispiel eines Entwässerungsaufbaus in vergrößerter Schnittdarstellung.

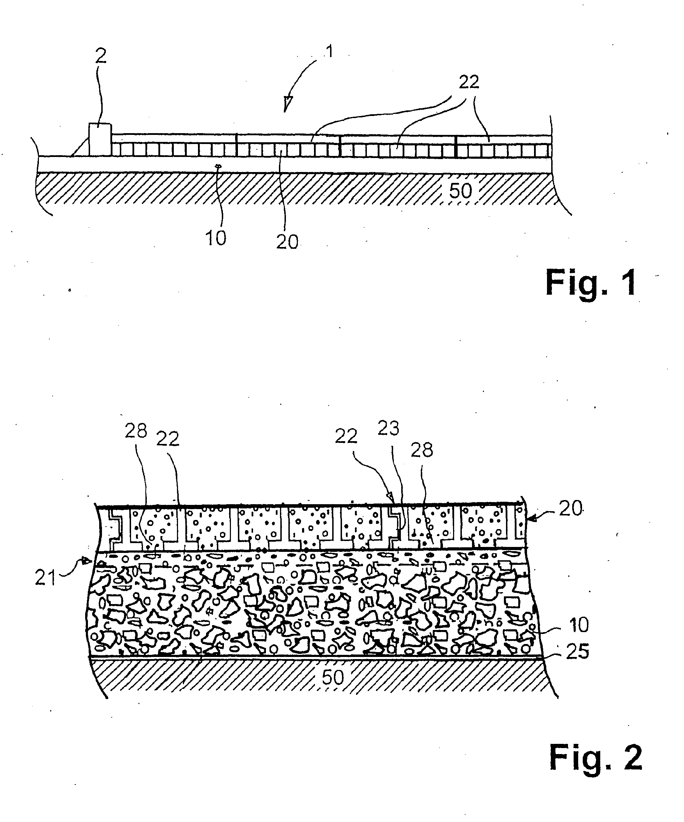

Wie aus Fig. 1 ersichtlich, ist der Entwässerungsaufbau 1 für Parkplätze oder Zufahrten von einer Umrandung 2 umgeben, die zugleich als Abstützung ausgebildet sein kann. Im Ausführungsbeispiel der Fig. 1 sind zwei Schichten über dem Untergrund 50 vorgesehen, nämlich eine (untere) Tragschicht 10 und ein Fahrbelag 20. Diese befinden sich über dem Baugrund 50, der beispielsweise ein planierter Boden sein kann. Die Tragschicht 10 gewährleistet sowohl die optimale Wasserabführung als auch eine hohe Stabilität und Planebenheit der Parkplätze oder Zufahrten 1. Der Fahrbelag 20 weist Gitterelemente 22, d. h. Platten in Form eines Gitters auf, die zu einer Fläche verlegt worden sind. Die Gitterelemente sind auf der Tragschicht 10 zusammenhängend im Verbund verlegt und bilden einen tragfähigen Untergrund, über den auftretende Kräfte auch seitlich abgeleitet werden. Die Gitterelemente 22 können zudem Durchbrüche aufweisen, über die Wasser von der Oberfläche der Parkplätze oder Zufahrten hin zum Baugrund 50 ablaufen kann. Als Tragschicht 10 ist je nach gewünschter Tragfähigkeit (Pkw oder auch Lkw) durch eine ca. 15 bis 30 cm dicke Schicht aus Schotter oder Drainagenkies ohne Zuschlagstoffe oder Feinanteile (Sand) gebildet.

Fig. 2 zeigt die Ausführung des erfindungsgemäßen Entwässerungsaufbaus in detaillierter Schnittdarstellung. Der Entwässerungsaufbau 1 besitzt hier noch zusätzliche Schichten, nämlich ein Verlegebett 21 und unmittelbar über dem Baugrund 50 eine Gewebeauflage 25, die wasserdurchlässig ist und die Tragschicht 10 und natürlichen Boden trennt. Weiterhin wird durch die trennende Gewebeauflage 25 ein Vermischen von Material des Baugrundes 50 mit dem Material des Entwässerungsaufbaus 1, insbesondere der Tragschicht 10 verhindert. Schließlich kann zusätzlich zwischen Fahrbelag 20 und Tragschicht 10 ein Kunststoffnetz vorgesehen sein (nicht dargestellt).

Die Tragschicht 10 besteht im Ausführungsbeispiel der Fig. 2 etwa zu 60% aus gebrochenem Schotter (durch unregelmäßige Vierecke dargestellt) und etwa 40 % aus grobem Drainagekies (Rundkiesel). Der darüber angeordnete Fahrbelag 20 weist Gitterelemente 22 auf, die auf der Verlegeschicht 21 verlegt worden sind. Wie aus Fig. 2 ersichtlich, sind die Gitterelemente 22 mit jeweils einer Nut- und Federverbindung 23 versehen, wodurch die Gitterelemente 22 stabil verlegt werden können und ein seitliches Verrutschen auch zusammen mit der Umrandung 2 verhindert wird. Weiterhin wird über die Nut- und Federverbindung 23 eine Übertragung der Kräfte von einem Gitterelement 22 auf benachbarte Gitterelemente ermöglicht. Somit werden die Gewichtskräfte der Fahrzeuge optimal abgeleitet. Die Gitterelemente 22 bestehen vorzugsweise aus einem Kunststoffmaterial und weisen nach unten hin Durchbrüche 28 auf, durch die Wasser rasch abgeleitet werden kann. Dieser Fahrbelag 20 aus den Gitterelementen 22 ist verfüllt, insbesondere mit Splitt, Sand oder Rundkies, kann aber auch mit im Rastermaß passenden Pflastersteine verfüllt bzw. ausgelegt sein.

Die Tragschicht 10 besteht vorwiegend aus gebrochenem Schotter, dem in Abhängigkeit von der jeweiligen Tragfähigkeit allenfalls sehr geringe Sand-Feinanteile zugegeben sind. Als Schichtstärken sind bei der Tragschicht 10 etwa 15 - 30 cm und beim Fahrbelag 20 etwa 6 cm vorgesehen, wobei zwischen diesen beiden Schichten das Verlegebett 21 aus Splitt etwa 2 - 5 cm einnehmen kann.

## Patentansprüche

1. Entwässerungsaufbau, insbesondere für Parkplätze oder Zufahrten, mit wenigstens zwei Schichten, nämlich einer Tragschicht über dem Baugrund und einem Fahrbelag, **dadurch gekennzeichnet, dass**
die Tragschicht (10) aus gebrochenem Schottermaterial oder Drainagenkies besteht und der Fahrbelag (20) aus verfüllten Gitterelementen (22) besteht, die miteinander durch Nut- und Federverbindungen (23) im Verbund stehen.

2. Entwässerungsaufbau nach Anspruch 1, **dadurch gekennzeichnet, dass** die Tragschicht (10) zumindest zu 60 % aus Schottermaterial besteht.

3. Entwässerungsaufbau nach Anspruch 1 oder 2, **dadurch gekennzeichnet, dass** die Tragschicht (10) ausschließlich aus Schottermaterial besteht.

4. Entwässerungsaufbau nach einem der Ansprüche 1 bis 3, **dadurch gekennzeichnet, dass** die Körnung des Schottermaterials der Tragschicht (10) zwischen 20 und 150 mm beträgt.

5. Entwässerungsaufbau nach einem der Ansprüche 1 bis 4, **dadurch gekennzeichnet, dass** zwischen der Tragschicht (10) und dem Fahrbelag (20) ein Verlegebett (21) aus Splitt vorgesehen ist.

6. Entwässerungsaufbau nach einem der Ansprüche 1 bis 5, **dadurch gekennzeichnet, dass** zwischen Tragschicht (10) und Fahrbelag (20) eine Trennschicht vorgesehen ist, insbesondere ein Trennvlies oder Kunststoffnetz.

7. Entwässerungsaufbau nach einem der Ansprüche 1 bis 6, **dadurch gekennzeichnet, dass** zwischen Baugrund (50) und Tragschicht (10) ein wasserdurchlässiges Bauvlies oder eine Gewebeauflage (25) vorgesehen ist.

8. Entwässerungsaufbau nach einem der Ansprüche 1 bis 7, **dadurch gekennzeichnet, dass** die Gitterelemente (22) auf der der Tragschicht (10) zugewandten Unterseite Durchbrüche (28) aufweisen.

9. Entwässerungsaufbau nach einem der Ansprüche 1 bis 8, **dadurch gekennzeichnet, dass** die Gitterelemente (22) mit Pflastersteinen belegt sind oder mit solchen verfüllt sind, die in ihren Abmessungen an das Rastermaß der Gitterelemente (22) angepasst sind.
